# EUROPEAN PATENT SPECIFICATION

(11) **EP 4 262 363 B1**
(45) Date of publication and mention of the grant of the patent: **04.11.2026**
(21) Application number: 21834924.9
(22) Date of filing: 17.12.2021
(51) Int. Cl.: A01J 27/00, B44B 5/00, B44B 5/02

(54) **MARKING DEVICE FOR FOOD PRODUCTS AND CORRESPONDING MARKING METHOD**
MARKIERGERÄT FÜR LEBENSMITTEL UND ENTSPRECHENDES MARKIERUNGSVERFAHREN
DISPOSITIF DE MARQUAGE POUR PRODUITS ALIMENTAIRES ET PROCÉDÉ DE MARQUAGE CORRESPONDANT

(30) Priority: 18.12.2020 IT 202000031460
(43) Date of publication of application: 25.10.2023
(73) Proprietor: Form-5 S.r.l., 25133 Brescia (IT)
(72) Inventor: FALARDI, Ivan Pietro, 25133 Brescia (IT)
(74) Representative: Biesse S.r.l.
(86) International application number: PCT/IB2021/061913
(87) International publication number: WO 2022/130313

(56) References cited:
- EP-B2- 0 685 154
- WO-A1-2004/112982
- CH-A- 239 377
- FR-A- 648 262
- FR-A1- 2 589 320
- FR-A1- 2 677 303
- IT-A1- PR20 080 014
- US-A- 1 714 795
- US-A- 4 832 973
- US-A1- 2012 000 378

## Description

### Field of the invention

The present invention concerns a marking machine for generating an imprint onto a surface to be marked, wherein the imprint corresponds to a desired mark imprinted onto the surface.

A marking machine of the aforesaid type, also known as marker or marking or marker apparatus, is used, for example but not only, in the dairy field of hard cheeses.

### Known art

The current marking or marker procedure, for example in the dairy field of the aging of hard cheeses, uses an overheated metal die which, by thermal action, melts and burns the contact surface, thus creating lines, characters, drawings or a combination thereof.

In practice, the current marking processes are so-named hot processes which use dies which, once overheated, are pressed onto the surface to be marked, and within which the material constituting the surfaces is cut by thermal action, thus forming the desired imprint.

Although addressing the purpose the hot marking processes and thus the use of the aforesaid dies are not free from drawbacks, such as the generation of fumes caused by the thermal action onto the surfaces to be marked, with a consequent risk to the health of the operators.

A further drawback lies in the pollution of the workplace caused by the same aforesaid fumes.

It should be added that further fumes are disadvantageously generated by the systems for overheating the dies. In fact, in order to bring the dies to the desired high temperatures, free flame burners supplied with fuel gas, often coming from portable cylinders, are generally used, or electric resistances are used. In addition to the aforesaid further fumes, it should be added that, in both cases set forth above, there disadvantageously also is the risk of starting fires in the workplace.

In summary, the current marking processes are not healthy since they generate combustion fumes to burn the surfaces to be marked; they are not safe for the risk of fires in the workplaces where the marking operation is carried out; they are not safe since the combustion fumes can be inhaled by the operators and can contact the food products, thus contaminating them; they are not safe since some food products cannot have burnt and/or charred surface areas; they are not compatible with the environment since fumes are generated for burning the surfaces to be marked; they are not safe since they use flammable fuels and, on the whole, it can be said that they are not energetically environmentally friendly.

Document US 1,714,795 A describes an embossing machine comprising a movable head carrying a plurality of printing wheels, means for selectively positioning the printing wheels to form a design, means operatively connected to the positioning means for restraining movement of the movable head during the positioning operation, and means for moving the moving head.

Document FR 648 262 A describes a machine for embossing leather and similar materials to apply gold and other decorative patterns.

Document FR 2 677 303 A1 discloses a marking head and device for pressure-transfer of indicia onto the sidewall of a tire.

Document WO 2004/112982 A1 discloses an embossing machine comprises a displaceably guided matrix frame inside of which an eccentric shaft for driving a die is mounted.

Documents US4832973 A, CH239377A, EP0685154 B2, IT PR20080014 A1 and FR2589320 A1 disclose examples of conventional machines for marking on cheese.

### Summary of the invention

The technical problem underlying the present invention was to provide a marking machine for generating an imprint onto a surface to be marked, having features such as to overcome one or more of the drawbacks mentioned above with reference to the known art.

According to the invention, the aforesaid problem is solved by a marking machine as defined in claim 1.

In practice, the marking machine according to the present invention allows to create deformations onto the surface to be marked thanks to the movement of the working face of the die, which movement is substantially parallel to a working or marking surface, i.e. to the surface to marked, in one or more directions, thus according to a reciprocating motion, and/or substantially perpendicular to the working or marking surface, thus according to a percussion motion, wherein the removal and/or displacement of material from the surface to be marked allows the visualization of writings, lines, symbols or a combination thereof, i.e. a desired mark, i.e. the aforesaid imprint.

According to the invention, the aforesaid working face of the aforesaid die can have the positive of the mark to be made or the negative of the mark to be made.

According to the invention, the aforesaid marking machine can be a portable marking machine of small dimensions, for example for marking surfaces of limited extent, or can be a so-named static marking machine, for example for marking large surfaces of significant size.

Moreover, according to the invention, the present marking machine can be adapted for being combined with at least one outer auxiliary system and/or can itself comprise at least one auxiliary system.

An auxiliary, possibly outer, system of the aforesaid type is selected between:
a pumping system for delivering at least one pigment at the aforesaid working face and/or for delivering at least one substance aiding the mechanical marking at the aforesaid working face,
a suction system for sucking in waste material and/or vapors at the aforesaid working face and/or favoring the adhesion of the aforesaid marking machine to the surface to be marked or anyhow to a body comprising the surface to be marked;
a thermal stabilization system for heating and/or cooling the aforesaid working face.

In the event of marking machine adapted for being combined with at least one outer auxiliary system, the aforesaid marking machine preferably comprises at least one coupling for the outer auxiliary system and at least one path extended between the aforesaid at least one coupling and the aforesaid working face or a point of the aforesaid tool-holder body proximal to the working face.

Preferably, the aforesaid marking machine adapted for being combined with at least one outer auxiliary system comprises at least one gasket combined with the aforesaid tool-holder body and surrounding the aforesaid working face, which gasket is adapted for adhering to the surface to be marked, wherein the aforesaid gasket is preferably bellows-like or made of elastic material, for example rubber.

Preferably, the aforesaid marking machine adapted for being combined with at least one outer auxiliary system comprises at least one coupling for the outer auxiliary system, at least one arm combined laterally with the aforesaid tool-holder body, at least one suction pad combined with an end portion of the aforesaid at least one arm, on the side of the aforesaid die and which suction pad is adapted for adhering to the surface to be marked or to a body comprising the surface to be marked, at least one path extended between the aforesaid at least one coupling and the aforesaid at least one suction pad.

In the event of marking machine comprising at least one auxiliary system the latter and in particular the aforesaid pumping system, preferably comprises at least one pump and at least one path, wherein the aforesaid at least one pump is adapted to supply and measure out the aforesaid at least one pigment and/or adapted to supply and measure out the aforesaid at least one substance aiding the mechanical marking, and wherein the aforesaid at least one path is adapted for delivering the aforesaid at least one pigment and/or the aforesaid at least one substance aiding the mechanical marking, wherein the aforesaid at least one path is extended between the aforesaid at least one pump and the aforesaid working face, wherein the aforesaid at least one path more preferably comprises micro-holes distributed over the aforesaid working face for the passage of the aforesaid at least one pigment and/or the aforesaid at least one substance aiding the mechanical marking.

In the event of marking machine comprising at least one auxiliary system, the aforesaid pumping system preferably comprises at least one reservoir for the aforesaid pigment and/or the aforesaid substance aiding the mechanical marking, connected with the aforesaid at least one pump.

Advantageously, the aforesaid at least one pigment, which can be supplied onto the surface to be marked before and/or during and/or after the real marking process, i.e. the removal and/or displacement of material with the achievement of the desired imprint, seeps into the regions worked on onto the surface to be marked, thus increasing its contrast and therefore its visibility or distinctive character.

Advantageously, the aforesaid at least one substance aiding the mechanical marking can be a fluid, liquid or gas, in practice a chemical agent, or a paste or powder, for example abrasive.

In the event of marking machine comprising at least one auxiliary system, the aforesaid suction system comprises at least one pump and at least one path, wherein the aforesaid at least one pump is adapted for sucking air and the aforesaid at least one path is adapted for the passage of the air sucked, wherein the aforesaid at least one path extends between the aforesaid at least one pump and the aforesaid working face or a point of the aforesaid tool-holder body proximal to the working face.

Preferably, the aforesaid suction system comprises a gasket combined with the aforesaid tool-holder body and surrounding the aforesaid working face, which gasket is adapted for adhering to the surface to be marked, wherein the aforesaid gasket is preferably bellows-like or made of elastic material, for example rubber.

In all the embodiments provided above, the aforesaid gasket, being a perimeter gasket, surrounds the area to be marked, thus making a pneumatically sealed cavity between the surface to be marked and the die. Thus, a percentage of vacuum, which generates a force of adhesion between the die and the surface to be marked, is created by sucking air from the aforesaid cavity.

In the event of marking machine comprising at least one outer auxiliary system, the aforesaid suction system preferably comprises at least one pump adapted for sucking air, at least one arm combined laterally with the aforesaid tool-holder body, at least one suction pad combined with an end portion of the aforesaid at least one arm, on the side of the aforesaid die, which suction pad is adapted for adhering to the surface to be marked or to a body comprising the surface to be marked, and at least one path adapted for the passage of the air sucked and extended between the aforesaid at least one pump and the aforesaid at least one suction pad.

In all the embodiments provided above, the aforesaid at least one suction pad advantageously allows to achieve a force of adhesion between the marking machine and the surface to be marked or anyhow the body comprising the surface to be marked, similarly to the aforesaid gasket, but in a position distal from the working face of the aforesaid die in this case.

In the event of marking machine comprising at least one auxiliary system, the aforesaid thermal stabilization system comprises heating and/or cooling means preferably comprising at least one pump, at least one path extended between the aforesaid at least one pump and the aforesaid working face, and at least one fluid circulating in the aforesaid at least one path on which the aforesaid at least one pump operates.

In alternative, or in addition to the aforesaid heating and/or cooling means, the aforesaid at least one auxiliary system, in particular the aforesaid thermal stabilization system, preferably comprises heating and/or cooling means comprising at least one electric resistance and/or at least one Peltier cell and/or a *heat pipe.*

In practice, the aforesaid thermal stabilization system is a controlled and electric, or with liquid or gaseous inert fluids, heating and/or cooling system of the aforesaid working face of the die.

Thus, according to the above, electric resistances can be integrated within the aforesaid die for heating, or "Peltier" cells or a heat pipe can be provided in the die for the cooling, as circulating fluids can be used for transferring the heat from the die to the heating and/or cooling or refrigerating means.

Advantageously, the aforesaid thermal stabilization system allows to maintain the working face of the die at an ideal temperature for carrying out the marking process, without burning the material constituting the surface to be marked.

Thus, in addition or as an alternative to the above, the aforesaid thermal stabilization system can further comprise, for all the embodiments provided, remote heating and/or cooling means adapted for heating and/or cooling the aforesaid working face of the die whenever the marking machine is not used for the marking process with the removal and/or displacement of material from the surface.

The aforesaid remote heating and/or cooling means are selected from the group comprising heat plates, thermostated fluids and elements radiating IR (infrared) and/or UV rays (ultraviolet) and/or microwaves and/or induction ones.

In practice, the regulation of the temperature of the aforesaid working face can occur by conduction before contacting the working face with the surface to be marked, for example by contacting the same working face with the aforesaid heat plate and/or by immersing the aforesaid working face into the aforesaid thermostated fluid, otherwise the regulation of the temperature of the aforesaid working face can occur by convection before contacting the working face with the surface to be marked, by blowing a heated or cooled inert gas or a heated or cooled inert gas mixture, for example air or nitrogen, onto the aforesaid working face, or else the regulation of the temperature of the aforesaid working face can occur by irradiation, by orienting IR and/or UV rays, generated by the aforesaid radiated elements and/or microwaves and/or induction, thereon.

According to what is set forth above and according to the present invention, in all cases referred to above, at least part of the aforesaid movement means can be arranged at least partially outside the aforesaid tool-holder body and, in the embodiments wherein the present marking machine comprises at least one auxiliary system, the latter can be at least partially arranged outside the aforesaid tool-holder body.

Thus, according to the above, the present marking machine preferably comprises at least one auxiliary container outside the aforesaid tool-holder body, inside which at least part of the aforesaid movement means and/or at least part of the aforesaid at least one auxiliary system is/are housed.

Preferably, the aforesaid at least one auxiliary container is a shoulder backpack.

In practice, in the present marking machine, in particular but not only in the so-named portable version, part of the aforesaid movement means and, specifically, the so-named sources of motion, and/or part of the at least one auxiliary system and, in particular, the pumping and/or suctioning devices, such as the aforesaid at least one pump and/or the aforesaid at least one reservoir, and part of the aforesaid at least one path, can be arranged outside the aforesaid tool-holder body, thus preferably arranged inside the aforesaid auxiliary container, also for ergonomic matters.

Thus, at least one given motion, which is then transmitted unchanged, thus transmitted as the aforesaid at least one given motion, or transformed, thus transmitted subsequently to a transformation of the aforesaid at least one given motion into at least one different motion, to the aforesaid working face can be generated inside the aforesaid at least one auxiliary container. For example, a rotary motion generated by the aforesaid sources of motion can be transmitted through a coaxial coil to motion transforming means which transform it into another motion which is then transmitted to the working face of the die. An oscillatory motion can instead be transmitted directly, without transformation, from the coaxial coil to the working face of the die.

In essence, a coaxial coil is a flexible steel cable inside a flexible tube or spring which can transmit the rotary motion, whenever the cable rotates, and/or the percussion motion, whenever the cable reciprocates along its extent direction.

Thus, the electricity needed for the operation of the present marking machine and, in particular, needed for the movement of the working face and/or necessary for the supply of the aforesaid at least one auxiliary system can thus be generated inside the aforesaid at least one auxiliary container, the supply of the aforesaid at least one pigment and/or a pulsating pressure generated by a piston or diaphragm system can thus be generated for supplying a diaphragm percussion system or a piston percussion system, as will become clearer hereunder, and/or the suction for collecting waste materials of the marking process and/or vapors and/or for creating vacuum to cause the adhesion of the marking machine onto the surface to be marked or anyhow to a body comprising the surface to be marked.

Preferably, the aforesaid movement means are electric, electromagnetic, pneumatic or a combination thereof and comprise an electric motor, an electromagnet and/or a pressurized fluid.

Depending on the type of movement means and on the type of motion desired for the working face, the present marking machine can thus comprise motion transforming means as set forth above, which motion transforming means are preferably selected from the group comprising: bevel gears, cogwheels, eccentric shafts, diaphragm systems, piston systems.

Preferably, the aforesaid marking machine comprises a cycle programmer and/or a local memory and/or a wired or *wireless* data transmission system comprising at least one data transmission board and/or a location system, preferably a GPS.

In practice, according to the invention, the present marking machine allows to achieve marking processes regulated by a preset indexed processing cycle program which can be saved locally and in remote servers through a wired or wireless system, in which two or more marking machines can be interconnected to each other for managing the production data and the logging of completed processing programs.

Moreover, through a PC or equivalent system interconnected with the production data of the marking machine on one hand and with servers on the other, it is possible to detect and store production data, processing recipes and any anomalies in real time. The connection to an aforesaid marking machine occurs by means of specific transmission boards for transmitting the signals collected by components such as, for example, sensors, motors, electrovalves, temperature and/or pressure transducers, with which the present marking machine can possibly be provided. The interconnection further allows to carry out a diagnosis of the marking machine as well as a remote assistance service and a predictive diagnostics. Moreover, the present marking machine allows the traceability and indexing of the markings made by authorized operators, whereas the location system allows to trace the position where the marking processes are carried out and to trace the displacement of the marking machine.

According to the invention, the aforesaid problem is also solved by a process of marking a surface, as defined in claim 17.

In the aforesaid process, the aforesaid surface is a surface of a food product, more preferably cheese.

### Brief description of the figures

Further characteristics and advantages of the invention will become clearer in the review of the following detailed description of some preferred, although not exclusive, embodiments illustrated by way of example and without limitations with the aid of the accompanying drawings, in which:
- figure 1 schematically illustrates a longitudinal sectional view of a marking machine having a tool-holder body and a die provided with a working face for generating an imprint onto a surface to be marked by mechanical action of removal and/or displacement of material from the aforesaid surface by means of the movement of the aforesaid working face, wherein the aforesaid marking machine is of the so-named portable type, according to a first embodiment of the present invention;
- figure 2a schematically illustrates the marking machine of figure 1 further comprising an auxiliary container outside the aforesaid tool-holder body, according to an implementation variant of the present invention;
- figure 2b illustrates a detail of the auxiliary container of figure 2a;
- figure 3 schematically illustrates a detail of the marking machine of figure 1, according to an implementation variant of the present invention;
- figure 4 schematically illustrates a longitudinal sectional view of the marking machine of figure 1, wherein the aforesaid movement of the aforesaid working face is a rotary-orbital motion, according to an implementation variant of the present invention;
- figure 5a schematically illustrates a longitudinal sectional view of the marking machine of figure 1, wherein the aforesaid movement of the aforesaid working face is a percussion motion, according to an implementation variant of the present invention;
- figure 5b schematically illustrates a longitudinal sectional view of the marking machine of figure 1, wherein the aforesaid movement of the aforesaid working face is both a percussion and rotary-orbital motion, according to an implementation variant of the present invention;
- figure 6a schematically illustrates a longitudinal sectional view of the marking machine of figure 1, wherein the aforesaid movement of the aforesaid working face is a reciprocating motion, according to an implementation variant of the present invention;
- figure 6b illustrates a front view of a detail of the marking machine of figure 6a;
- figure 7a schematically illustrates a partial sectional view of the marking machine of figure 1, wherein the aforesaid movement of the aforesaid working face is a percussion motion, according to an implementation variant of the present invention;
- figure 7b schematically illustrates a longitudinal sectional view of a detail of the marking machine of figure 7a;
- figure 8a schematically illustrates a partial sectional view of the marking machine of figure 1, wherein the aforesaid movement of the aforesaid working face is a percussion motion, according to an implementation variant of the present invention;
- figure 8b schematically illustrates a longitudinal sectional view of a detail of the marking machine of figure 8a;
- figure 9 schematically illustrates a longitudinal sectional view of the marking machine of figure 1, wherein the aforesaid movement of the aforesaid working face is a reciprocating motion, according to an implementation variant of the present invention;
- figure 10 schematically illustrates a longitudinal sectional view of the marking machine of figure 1, wherein the aforesaid movement of the aforesaid working face is a percussion motion, according to an implementation variant of the present invention.

### Detailed description of the invention

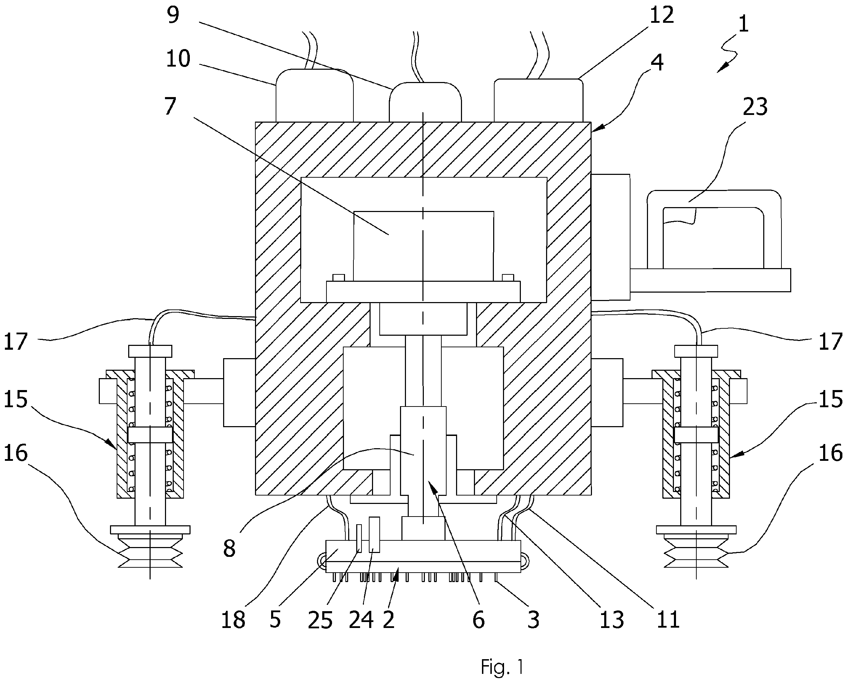

With reference to figure 1, 1 generally denotes a marking machine for generating an imprint onto a surface to be marked by mechanical action with removal and/or displacement of material from the aforesaid surface, according to the present invention.

The marking machine 1, which can also be defined as marker or marking or marker device and which, according to the example of figure 1, is of the so-named portable type, essentially comprises a die 2 having one movable working face 3 and a tool-holder body 4 with which the die 2 is combined.

In detail, the working face 3 of the die 2, which in practice is a sort of punch or stamp, has the positive or negative of the imprint to be made and substantially constitutes a tool which can be monolithic or constituted by more portions possibly independent of each other, in particular as far as their movement is concerned.

In any case, the die 2 is preferably interchangeable and is thus preferably combined with the tool-holder body 4 in a removable way. For the purpose, the marking machine 1 comprises a coupling 5 provided with a surface with latches which allows to mount, lock and quickly replace the die such as to be able to change different working faces for obtaining different imprints.

According to the invention, the aforesaid imprint, thus the removal and/or displacement of material from the aforesaid surface, is achieved by means of the movement of the working face 3, which movement can be generated in various ways and may be characterized by different motions, such as for example a rotary-orbital, percussion and/or reciprocating motion, as will become clearer hereunder.

The marking machine 1 thus comprises movement means for moving the working surface 2, generally denoted by 6.

According to the example of figure 1, the aforesaid movement means comprise an electric motor 7, which converts electric energy into mechanic energy of rotary motion, and motion transforming means, for example a vibrating mechanism 8, which is in practice a mechanical system which converts the rotary motion into a different type of motion according to need, for example a reciprocating motion, a rotary-orbital motion or a percussion motion, as set forth above.

As an alternative, the motion of the aforesaid working face can be generated directly by an electromagnetic system wherein a magnetic field, which attracts and/or repels a magnetic mass thus generating the desired motion, for example a reciprocating or percussion motion, is generated through electricity, as will become clearer hereunder.

According to the example of figure 1, the marking machine 1 further comprises a connection 9 for connecting the motor 7 to an energy source or accumulator.

The so-named quick connection 9, for example of the socket-plug type, allows to connect electric accumulators or a cable that allows to remotely arrange the position of the electric accumulators themselves or to connect to the aforesaid power source, for example an electric network.

Moreover, according to the present invention and according to the example of figure 1, the marking machine 1 can be adapted for being combined with at least one outer auxiliary system and/or can itself comprise at least one auxiliary system.

An auxiliary, possibly outer, system of the aforesaid type, which is thus optional, is selected between:
a pumping system for delivering at least one pigment at the working face 3 and/or for delivering at least one substance aiding the mechanical marking at the working face 3;
a suction system for sucking waste material and/or vapors at the working face 3 and/or favoring the adhesion of the marking machine 1 to the surface to be marked or anyhow to a body comprising the surface to be marked;
a thermal stabilization system for heating and/or cooling the working face 3.

According to the invention, in the event of marking machine adapted for being combined with at least one outer auxiliary system, the marking machine 1 preferably comprises at least one coupling for the outer auxiliary system and at least one path extended between the aforesaid at least one coupling and the aforesaid working face or a point of the tool-holder body proximal to the working face.

In particular, according to the example of figure 1, the marking machine 1 comprises a coupling 10, or first coupling, and a path 11, or first path or duct, such as for example for the aforesaid pumping system, and a coupling 12, or second coupling, and a path 13, or second path or duct, for example for the aforesaid suction system.

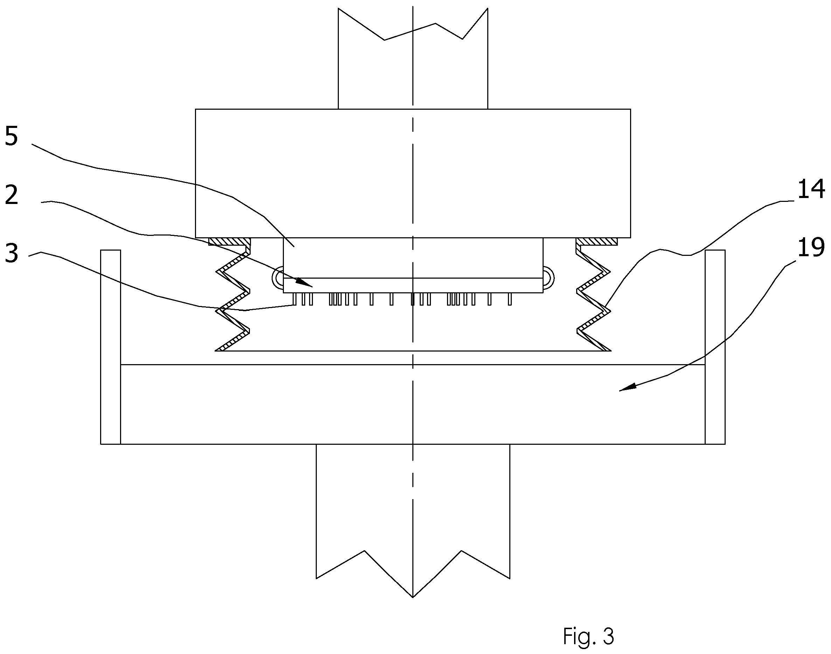

For favoring both the adhesion of the working face 3 to the surface to be marked and the suction of the waste material deriving from the mechanical action of the working face 3, the present marking machine can possibly comprise a gasket 14 combined with the tool-holder body 4 and surrounding the working face 3, which gasket is adapted for adhering to the surface to be marked, as depicted in the example of figure 3.

Advantageously, the gasket 14 is shaped bellows-like and/or made of elastic material, for example rubber.

Moreover, according to the example of figure 1, as an alternative or in addition to the above, for favoring the adhesion to the surface to be marked or anyhow to a body comprising the surface to be marked, the marking machine 1 comprises a couple of arms, each denoted by 15, combined laterally with the tool-holder body 4, and a couple of suction pads, each denoted by 16 and each combined with an end portion of a respective arm 15 on the side of the die 2.

The suction pads 16 are adapted for adhering to the surface to be marked or to a body comprising the surface to be marked also thanks to two respective paths 17, each extended between the aforesaid coupling 12, or a different similar coupling, and a respective suction pad 16, thus in practice achieving a suction system of the type set forth above with reference to the aforesaid gasket.

As stated, the marking machine 1 is adapted for being combined with at least one outer auxiliary system and/or can itself comprise at least one auxiliary system.

According to the above, the marking machine 1 is shown with a path 18, or third path or duct, of a thermal stabilization system of the aforesaid type, with which the marking machine 1 is provided.

The aforesaid thermal stabilization system comprises heating and/or cooling means which can comprise a pump, a path extended between the aforesaid pump and the aforesaid working face, and a fluid circulating in the aforesaid path on which the pump operates.

As an alternative or in addition to the above, the aforesaid heating and/or cooling means can comprise an electric resistance and/or a Peltier cell and/or a *heat pipe.*

According to the example of figure 1 and to what is set forth above, the marking machine 1 is depicted with pre-heating electric resistances denoted by 24, and thermocouples 25 for controlling the temperature.

In practice, the aforesaid thermal stabilization system is an electric, or with liquid or gaseous inert fluids, heating and/or cooling system of the working face 3 of the die 2.

As an alternative or in addition to what is described above, the aforesaid thermal stabilization system can comprise remote heating and/or cooling means adapted for heating and/or cooling the working face 3 whenever the marking machine 1 is not used for the marking process.

The aforesaid remote heating and/or cooling means can be, for example, heat plates, thermostated fluids and elements radiating IR (infrared) or UV rays (ultraviolet) and/or microwaves and/or induction ones.

According to the invention, the example of figure 3 shows a heat plate 19 to be put in contact with the working face 3 whenever the marking machine is not in use.

As stated, the marking machine 1 is adapted for being combined with at least one outer auxiliary system and/or itself comprises at least one auxiliary system.

According to the above, in the event of marking machine comprising at least one auxiliary system of the aforesaid type, the auxiliary system can be a pumping system of the aforesaid type comprising a pump and a path, wherein the pump is adapted to supply and measure out the aforesaid pigment and/or adapted to supply and measure out the aforesaid substance aiding the mechanical marking, and wherein the path is adapted for delivering the pigment and/or the substance aiding the mechanical marking, wherein the path is extended between the pump and the working face of the die, wherein the path preferably comprises micro-holes distributed over the working face for the passage of the pigment and/or substance aiding the mechanical marking.

Moreover, the pumping system can comprise a reservoir connected with the aforesaid pump, for the pigment and/or substance aiding the mechanical marking.

According to the above, in the event of marking machine comprising at least one auxiliary system of the aforesaid type, the auxiliary system can be a suction system comprising a pump and a path, wherein the pump is adapted for sucking air and the path is adapted for the passage of the air sucked, wherein the path is extended between the pump and the working face of the die or a point of the tool-holder body proximal to the working face.

Moreover, in the event of marking machine comprising at least one auxiliary system of the aforesaid type, what is set forth above applies with reference to the gasket 14 described above and to which reference is made, to the suction pads 16 described above and to which reference is made, and to the arms 15 with respective paths 17 to whose description reference is made.

According to what is set forth above and according to the present invention, in the embodiments in which the present marking machine comprises at least one auxiliary system, the latter can thus be at least partially arranged outside the aforesaid tool-holder body. According to the present invention, it should be further specified that in all embodiments provided, also at least part of the aforesaid movement means can be arranged at least partially outside the aforesaid tool-holder body.

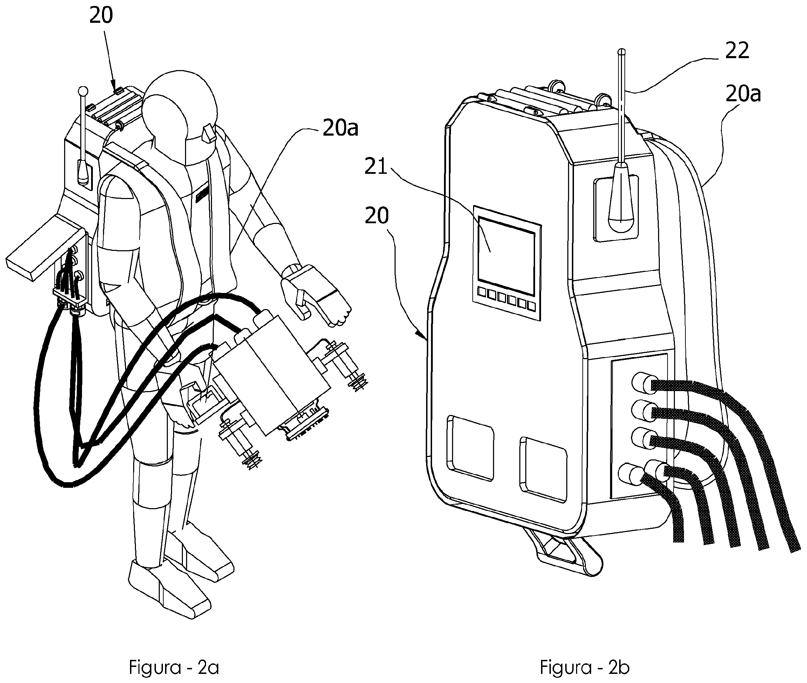

According to the above, the present marking machine can thus comprise one auxiliary container 20 outside the tool-holder body 4, inside which at least part of the aforesaid movement means and/or at least part of the aforesaid at least one auxiliary system is/are housed, as shown in the examples of figures 2a and 2b.

Preferably, the auxiliary container 20 is a shoulder backpack comprising shoulder straps 20a.

According to the above, the example of figure 1 thus illustrates a marking machine according to the present invention essentially adapted for being combined with one or more outer auxiliary systems of the aforesaid type, whereas the example of figure 2a shows a marking machine according to the present invention comprising one or more auxiliary systems of the aforesaid type at least partially arranged inside the auxiliary container 20, wherein in the example of figure 2a the reference 1 denotes a part of the marking machine essentially corresponding to the marking machine 1 of the example of figure 1 to whose description reference is made, which is completed by the aforesaid auxiliary container 20 with respective auxiliary systems of the aforesaid type.

Substantially, in the present marking machine, particularly, but not only, in the so-named portable version, parts of the aforesaid movement means and/or part of the at least one auxiliary system can be arranged outside the tool-holder body, thus arranged inside the aforesaid auxiliary container also for ergonomic purposes.

Preferably, in all embodiments described above, the present marking machine comprises a cycle programmer and/or a local memory both denoted by 21, and/or a wired or wireless data transmission system 22 comprising at least one data transmission board and/or a location system, preferably a GPS.

The marking machine 1 is further provided with a handgrip 23.

In detail, as far as the aforesaid movement means are concerned, as previously mentioned, it should be said that they determine the movement of the working face of the marking machine, which movement is characterized by the type of motion.

Thus, depending on the type of motion desired or other more or less contingent factors, different types of movement means, such as illustrated hereunder with reference to implementation variants of the present invention, can be provided.

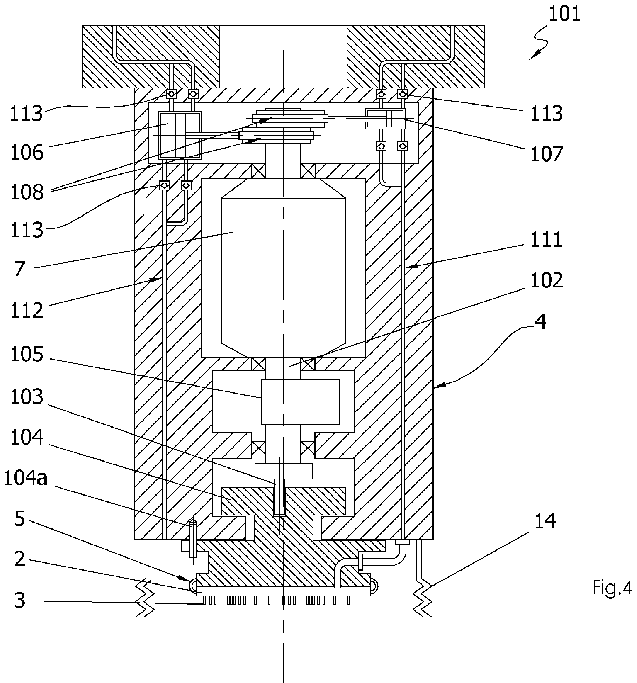

The example of figure 4 shows a marking machine 101 similar to the marking machine illustrated above with reference to figures 1-3 to whose description reference is made, wherein structurally or functionally similar parts maintain the same reference numbers of the marking machine 1 described above, wherein the movement of the working face 3 is a rotary-orbital or orbitally-rotating motion.

In detail, the marking machine 101 comprises movement means comprising a motor 7 and motion transforming means comprising a drive shaft 102 on which the motor 7 operates, an eccentric pin 103 combined with an end of the drive shaft 102 and a disc 104 provided with a hole engaged by the eccentric pin 103, on which the die 2 provided with the working face 3 by means of a quick coupling 5 is constrained.

The motor 7 rotates the eccentric pin 103 which makes the disc 104 rotate orbitally.

Since the eccentric motion generates a dynamic unbalance due to the orbiting mass, a counter mass 105 is present on the drive shaft 102 for rebalancing the eccentric mass.

As far as the disc 104 is still concerned, it should be said that it is free to move and rotate orbitally in a plane and it is of the floating type. Moreover, since it is necessary to limit the rotation of the working face 3 in order to make the marking, the movement means comprise an anti-rotation pin **104a** interposed between the tool-holder body 4 and the disc 104 itself.

The marking machine 101 further comprises auxiliary systems of the aforesaid type and, particularly, a suction system and a pumping system that comprise respective pumps **106** and 107 housed inside the tool-holder body 4.

The pumps **106** and 107 can be, for example, with pistons driven by connecting rods on eccentric shafts, altogether denoted by 108.

The aforesaid suction system further comprises a path or duct 112 extended between the pump 106 and a point of the tool-holder body 4 proximal to the working face 3 and non-return valves 113 which allow, also thanks to the presence of the gasket 14, to create vacuum which makes the working face 3 adhere to the surface to be marked.

The aforesaid pumping system further comprises a path or duct 111 extended between the pump 107 and the working face 3 and non-return valves 113 which allow to push a pigment and/or agent aiding the mechanical marking at the working face 3.

In this case, both the pigment and the substance aiding the mechanical marking are supplied to the pump 107 from remote reservoirs not being part of the marking machine 101.

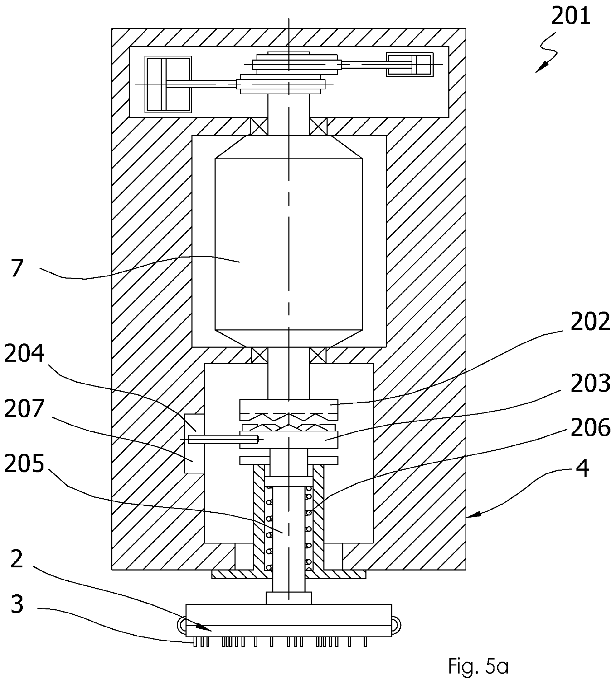

The example of figure 5a shows a marking machine 201 similar to the marking machine illustrated above with reference to figures 1-3 to whose description reference is made, wherein structurally or functionally similar parts maintain the same reference numbers of the marking machine 1 described above, wherein the movement of the working face 3 is a percussion motion.

In detail, the marking machine 201 comprises movement means comprising a motor 7 arranged in the tool-holder body 4 and motion transforming means comprising a notched disc 202 rotated by the motor 7, a notched counter-disc 203 contacting the notched disc 202, an anti-rotation system operating on the notched counter-disc 203 and comprising a pin 204, a stem 205 integral on one side with the notched counter-disc 203 and on the other side with the die 2 provided with the working face 3, and a spring 206 operating on the stem 205.

The notched disc 202 and the notched counter-disc 203 are coaxial to each other and the toothing is designed so that there is no firm grip between them, but rather so that a disc can slip with respect to the other.

In detail, the aforesaid anti-rotation system locks the rotation of the notched counter-disc 203 which is however free to move along its axis. For the purpose, the pin 204 is fixed in the notched counter-disc 203 on one side and is on the other side inserted into a seat 207 provided in the tool-holder body 4 which allows an axial movement parallel to the axis of the two discs.

The rotation of the notched disc 202 is achieved by operating the motor 7 by means of a shared shaft and, considering the notched counter-disc 203 cannot rotate but can move axially, the toothing of the two discs alternately move the two discs away from and towards each other, wherein, in particular the notched counter-disc 203 moves away from the notched disc 202 until reaching the maximum height of the toothing.

The movement of the stem 205 which, in particular, axially slides downwards due to the movement of the discs and is pushed upwards by the spring 206, corresponds to the movement of the notched counter-disc 203.

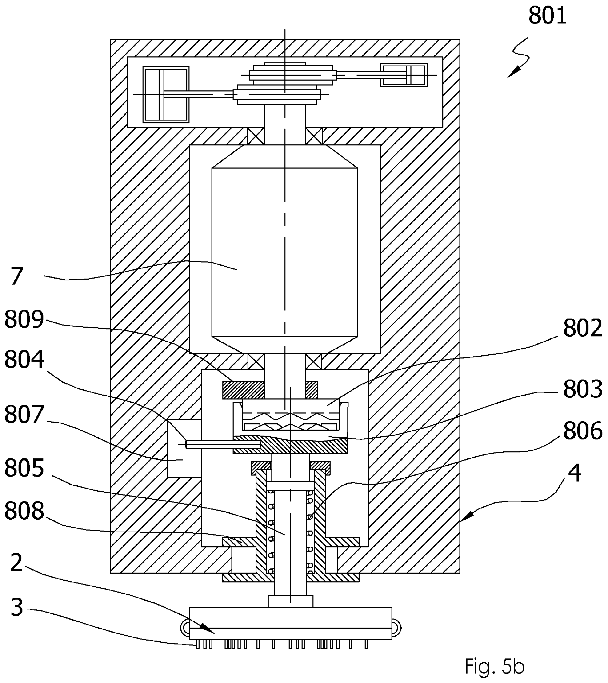

The example of figure 5b shows a marking machine 801 similar to the marking machine illustrated above with reference to figures 1-3 to whose description reference is made, wherein structurally or functionally similar parts maintain the same reference numbers of the marking machine 1 described above, wherein the movement of the working face 3 is a percussion and orbitally-rotating or rotary-orbital motion.

In detail, the marking machine 801 comprises movement means comprising a motor 7 arranged in the tool-holder body 4 and motion transforming means comprising an eccentric notched disc 802 rotated by the motor 7, a notched counter-disc 803 contacting the eccentric notched disc 802, an anti-rotation system operating on the notched counter-disc 803 and comprising a pin 804, a stem 805 integral on one side with the notched counter-disc 803 and on the other side with the die 2 provided with the working face 3, and a spring 806 operating on the stem 805.

The elements already mentioned: notched counter-disc 803, the pin 804, the stem 805, the die 2, the working face 3, the spring 806 are supported by a floating disc 808 free to be displaced in parallel to the working surface of the working face 3.

The eccentric notched disc 802 and the notched counter-disc 803 are misaligned with each other and free to rotate the first with respect to the second, and the toothing is designed so that there is no firm grip between them, but rather so that a disc can slip with respect to the other. Moreover, the notched counter-disc 803 is combined with the eccentric notched disc 802 for receiving the eccentric motion and transmitting it to the stem 805 to which the die 2 provided with the working face 3 is constrained.

The motor 7 rotates the eccentric notched disc 802 which makes the notched counter-disc 803 rotate orbitally, the latter makes the stem 805 rotate orbitally, which stem makes the die 2 and the working face 3 rotate orbitally.

Since the eccentric motion generates a dynamic unbalance due to the orbital mass, a further eccentric mass 809 integral with the eccentric notched disc 802 is present for rebalancing the eccentric mass.

As far as the aforesaid anti-rotation system is concerned, which is useful for limiting the rotation of the working face 3 in order to be able to make the desired marking, it should be said that the pin 804 is interposed between the tool-holder body 4 and the same notched counter-disc 803, such as to lock the rotation of the notched counter-disc 803, which is however free to move along its axis and in orbital direction in parallel to the working surface of the working face **3.**

For the purpose, the pin **804** is fixed in the notched counter-disc **803** on one side and is on the other side inserted into a seat **807** provided with the tool-holder body **4** which allows an axial movement parallel to the axis of the two discs and to the orbital displacement due to the eccentricity of the eccentric notched disc **802.**

The rotation of the eccentric notched disc **802** is achieved by operating the motor **7** by means of a shared shaft and, considering the notched counter-disc **803** cannot rotate but can move axially and be displaced by orbiting, the toothing of the two discs alternately move the two discs away from and towards each other, wherein, in particular, the notched counter-disc **803** moves away from the eccentric notched disc **802** until reaching the maximum height of the toothing.

The movement of the stem **805** which, in particular, axially slides downwards due to the movement of the aforesaid two notched discs and is pushed upwards by the spring **806,** corresponds to the movement of the notched counter-disc **803.** Said movement is added to said previous orbital or rotary-orbital movement.

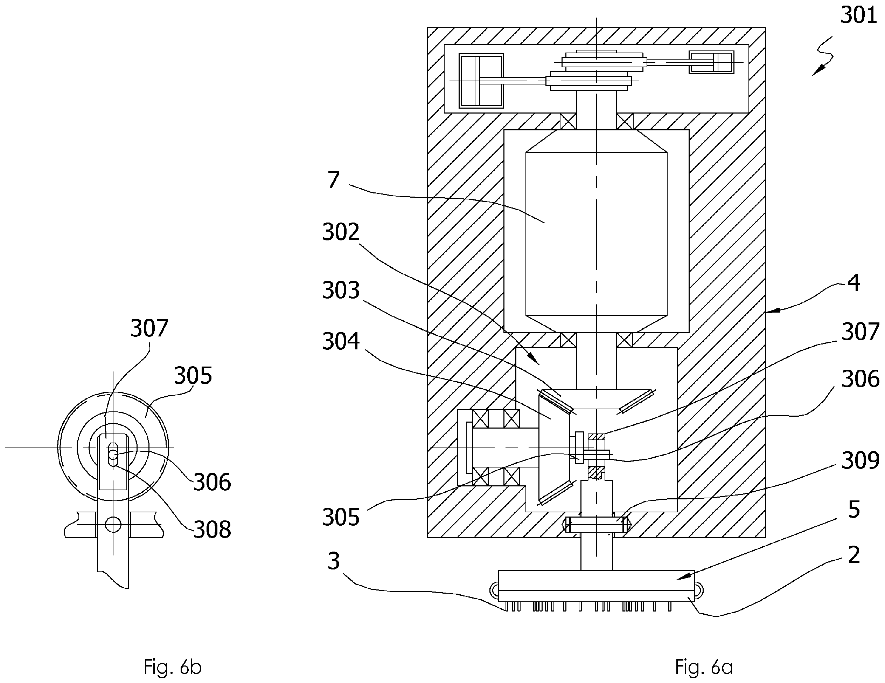

The example of figures 6a and 6b shows a marking machine **301** similar to the marking machine illustrated above with reference to figures 1-3 to whose description reference is made, wherein structurally or functionally similar parts maintain the same reference numbers of the marking machine **1** described above, wherein the movement of the working face **3** is a reciprocating motion.

In detail, the marking machine **301** comprises movement means essentially comprising a motor **7** inside the tool-holder body **4** and motion transforming means comprising a bevel gear pair **302** comprising a first conical element **303** integral with a shaft operated by the motor **7** and a second conical element **304** integral with an output shaft.

Moreover, the aforesaid movement means and, particularly, the motion transforming means comprise an eccentric pin **306** mounted coaxial to the output shaft **305,** a lever **307** provided at an end with a slot **308** engaged by the eccentric pin **306,** and a pin **309** on which the lever **307** is hinged and which is fixed within the tool-holder body **4.**

The lever **307,** at the end opposite the one where the slot **308** is arranged, is constrained to the coupling **5** on which the die **2** provided with the working face **3** is mounted.

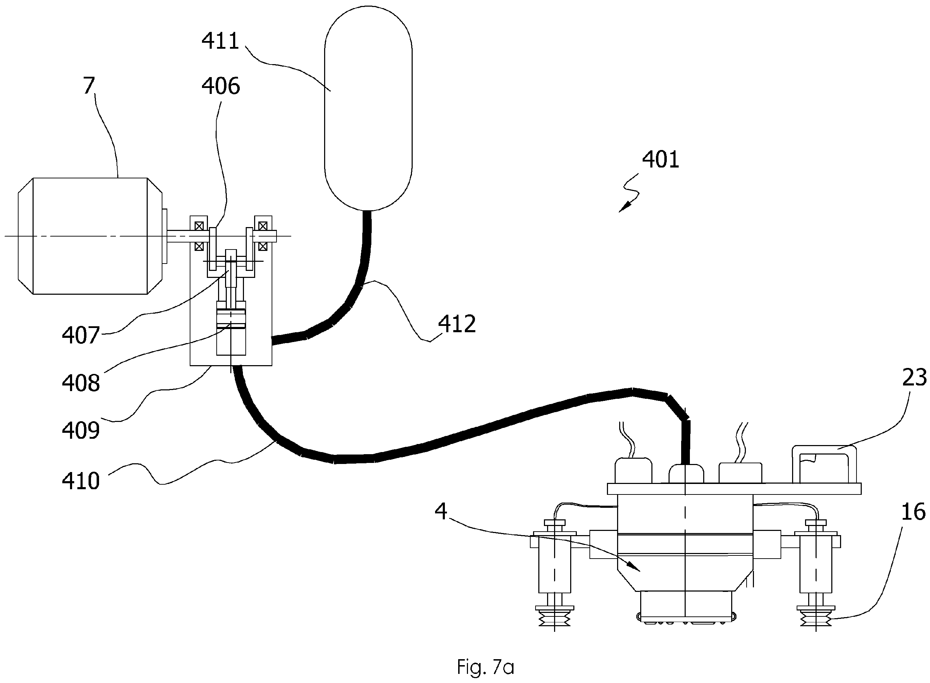

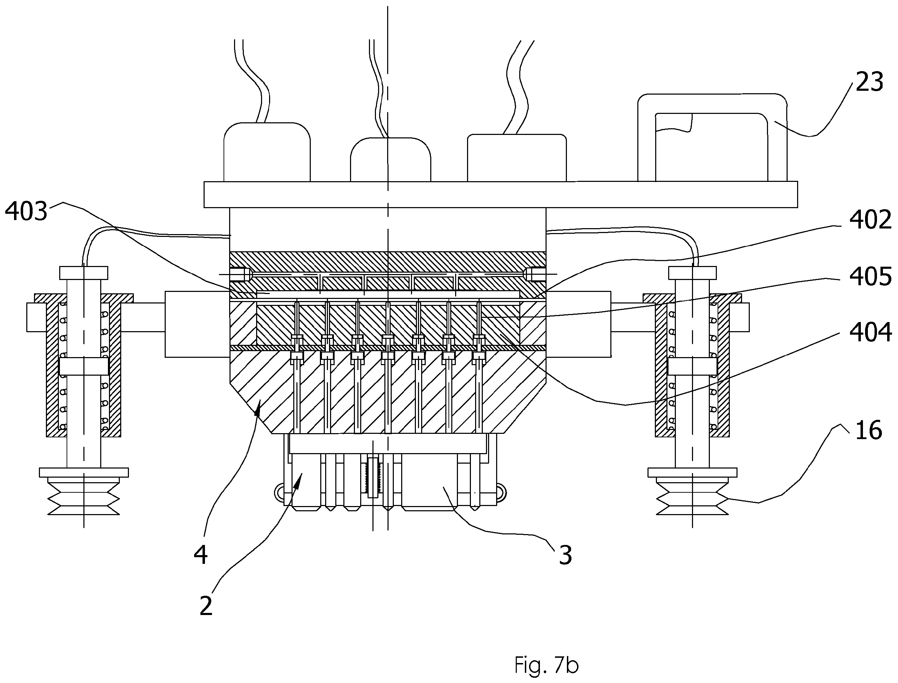

The example of figures 7a and 7b shows a marking machine **401** similar to the marking machine illustrated above with reference to figures 1-3 to whose description reference is made, wherein structurally or functionally similar parts maintain the same reference numbers of the marking machine **1** described above, wherein the movement of the working face **3** is a percussion motion.

In detail, the marking machine **401** comprises movement means partly arranged inside the too-holder body **4** and partly arranged outside the latter.

In particular, inside the tool-holder body **4,** the aforesaid movement means comprise a diaphragm **402** which divides a respective cavity provided inside the tool-holder body in two chambers: a first hermetic chamber denoted by **403** and filled with a pulsating pressurized fluid which acts on the diaphragm, and a second chamber **404** opposite the first chamber **403.**

The diaphragm **402** consists of a sheet of elastic material, for example polyurethane.

The movement means then comprise a plurality of stems, each denoted by **405,** which are arranged in the second chamber **404** and which contact the diaphragm **402** on one side, whereas on the other side they contact the die **2** provided with the working face **3.**

Whenever the diaphragm **402** moves due to the pressure of the fluid, the stems **405** contacting the diaphragm **402** transmit their motion to the die **2,** thus to the working face **3.**

The aforesaid movement means are further adapted for generating the aforesaid pulsating pressure and, for the purpose, outside the tool-holder body **4** they comprise a motor **7,** a crank **406,** a connecting rod **407,** a piston **408,** a liner **409** inside which the piston **408** slides, and a path or duct **410** extended between the liner **409** and the first chamber **403,** wherein the pressure generated by the rod-crank system is transferred to the first chamber **403,** thus to the diaphragm **402,** then to the stems **405** and finally to the die **2,** through the path **410.**

In order to balance possible losses of the aforesaid fluid, a reservoir **411** connected to the liner **409** by means of a duct **412** can further be provided.

The example of figures 7a and 7b also shows the suction pads **16** and the handgrip **23.**

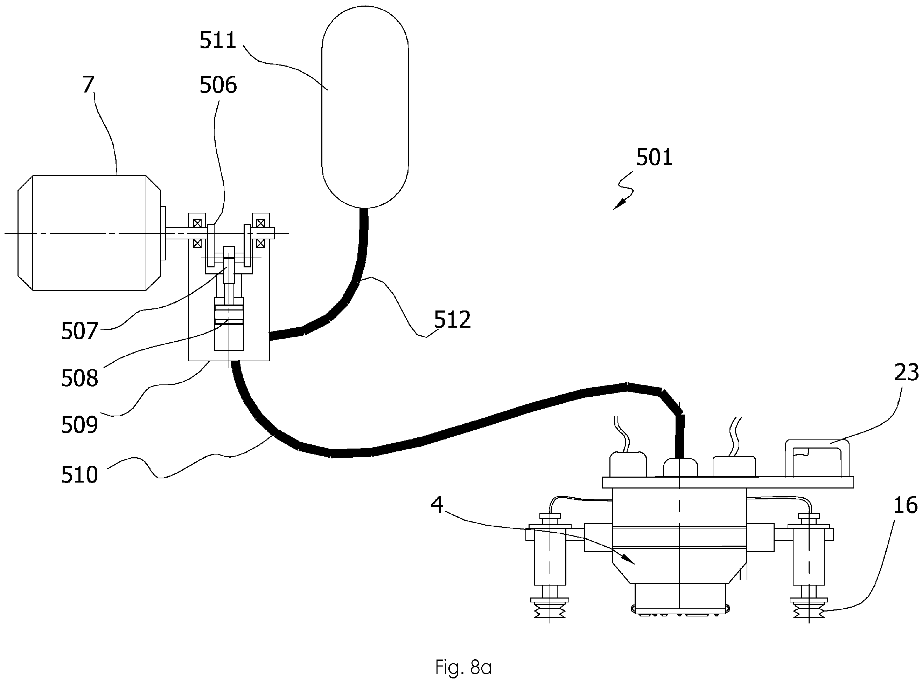

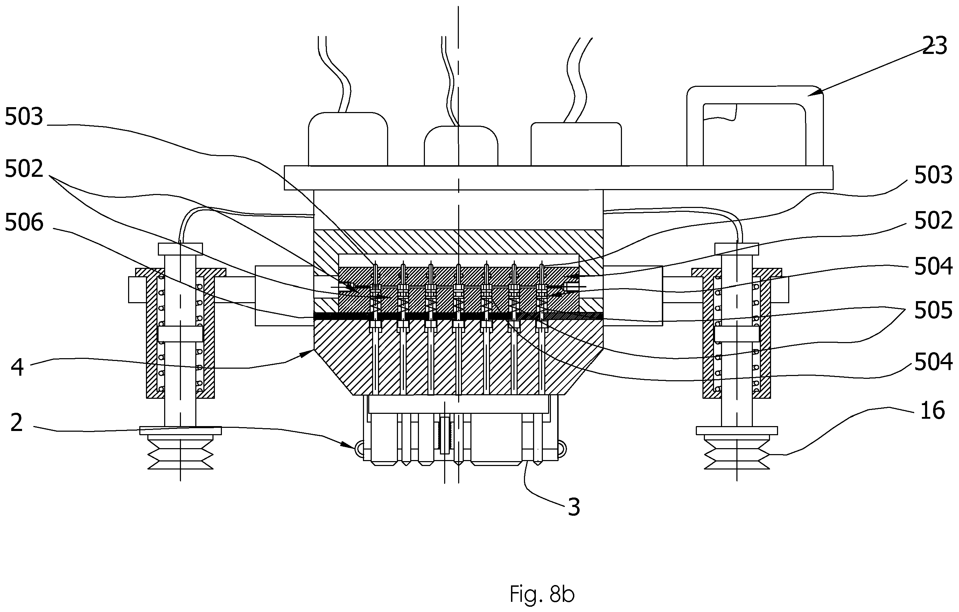

The example of figures 8a and 8b shows a marking machine **501** similar to the marking machine illustrated above with reference to figures 1-3 to whose description reference is made, wherein structurally or functionally similar parts maintain the same reference numbers of the marking machine **1** described above, wherein the movement of the working face **3** is a percussion motion.

Also in this case, the marking machine **501** comprises movement means partly arranged inside the too-holder body **4** and partly arranged outside the latter.

In particular, inside the tool-holder body **4,** the aforesaid movement means comprise a plurality of cylinders, each denoted by **502,** operated by a pressurized fluid.

In detail, each cylinder **502** comprises a guide stem **503,** a piston **504** on which the aforesaid fluid acts, and a transmission stem **505** integral with the respective piston **504** and which transmits the motion to the working face **3** of the die **2.**

The movement means inside the tool-holder body **4** further comprise a plurality of springs **506,** one spring per cylinder, adapted for withdrawing the transmission stems.

The aforesaid movement means are further adapted for generating the aforesaid pressure and for the purpose comprise, outside the tool-holder body **4,** a motor **7,** a crank **506,** a connecting rod **507,** a piston **508,** a liner **509** inside which the piston **508** slides, and a path or duct **510** extended between the liner **509** and the cylinders **502,** wherein the pressure generated by the rod-crank system is transferred to the cylinders **502,** thus to the transmission stems **505** and finally to the die **2,** through the path **510.**

In order to balance possible losses of the aforesaid fluid, a reservoir **511** connected to the liner **509** by means of a duct **512** can further be provided.

The example of figures 8a and 8b also shows the suction pads **16** and the handgrip **23.**

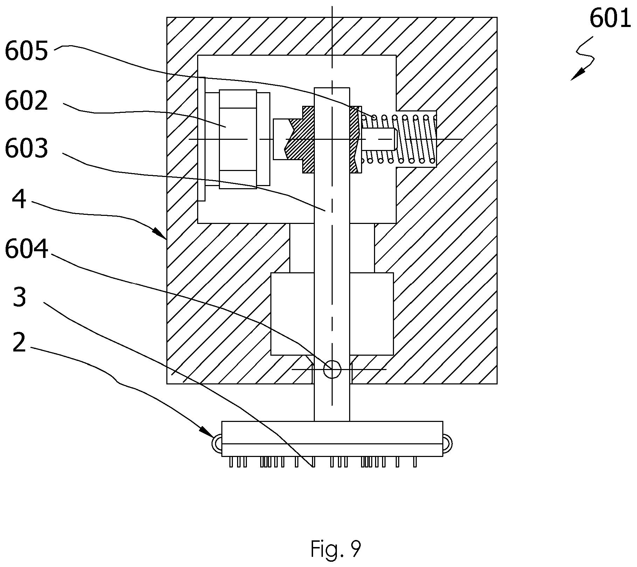

The example of figure 9 shows a marking machine **601** similar to the marking machine illustrated above with reference to figures 1-3 to whose description reference is made, wherein structurally or functionally similar parts maintain the same reference numbers of the marking machine **1** described above, wherein the movement of the working face **3** is a reciprocating motion.

In detail, the marking machine **601** comprises movement means comprising an electromagnet **602** arranged inside the tool-holder body **4,** and a lever **603** on which the electromagnet **602** acts at an end thereof and which is integral with the die **2** on the other end.

Moreover, the lever **603** is hinged inside the tool-holder body by means of a pin **604** arranged between the two ends of the lever.

The electromagnet **602** alternately pushes and attracts the lever **603,** thus moving the working face **3** of the die **2.**

In order to counter the action of the electromagnet **602,** the movement means comprise a spring **605** arranged in front of the electromagnet **602** on the other side with respect to the lever **603.**

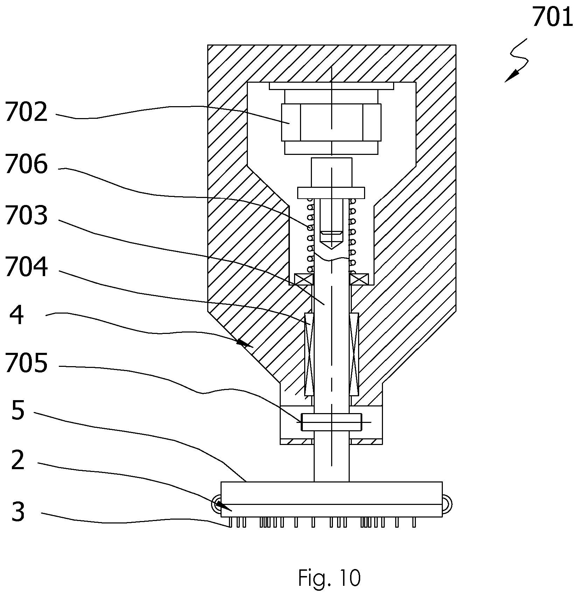

The example of figure 10 shows a marking machine **701** similar to the marking machine illustrated above with reference to figures 1-3 to whose description reference is made, wherein structurally or functionally similar parts maintain the same reference numbers of the marking machine **1** described above, wherein the movement of the working face **3** is a percussion motion.

In detail, the marking machine **701** comprises movement means comprising an electromagnet **702** arranged inside the tool-holder body **4,** and a stem **703** axially movable inside the tool-holder body **4** on which the electromagnet **702** acts at an end thereof and which is integral with the die **2** on the other end by means of the coupling **5.**

The movement means further comprise a bushing **704** for guiding the stem **703,** and a plug **705** arranged in a point between the ends of the stem **703** and fixed in a slot obtained inside the tool-holder body **4,** which plug ensures the anti-rotation.

A spring **706** can counter the action of the electromagnet **702.**

Controls for starting and/or setting the marking machine and status indicators of the marking machine itself are provided in all embodiments provided and described above.

Finally, it should be highlighted that, in addition to what is described above with reference to the example of figure 5b related to a marking machine whose movement of the working face has both a percussion and rotary-orbital motion, a double or triple movement of the working face of a marking machine according to the present invention can be achieved in various ways by combining, according to need, the operating principles of the examples set forth above.

For all embodiments described above, the present marking machine can be used in a process of marking a surface, as defined in claim 17.

According to the invention, the present process is carried out on a surface of a food product, more preferably cheese.

The advantages of the present invention which appeared clear in the description set forth above can be summarized by noting that a portable or fixed marking machine has been provided, which rests with adequate pressure onto the surface to be worked on, is moved thus creating a desired imprint without generating harmful fumes for the operator, without emitting dangerous gases for the environment, without risking combustion or fires, which does not use dangerous fuels, which does not leave processing residues such as burns or carbon residues, which does not contaminate foods with fumes, which is energetically environmentally friendly and which further allows the traceability of the marking process.

Still, the present marking machine is advantageously ergonomic, allows high productivity, is provided with high uptime and resistance, is versatile, is characterized by having low management costs, is programmable, allows to manage the traceability of the processes, is easy to learn and has the possibility of being Cordless.

In order to meet contingent and specific needs, a technician of the field can make numerous changes and modifications to the present invention in the embodiments shown and described, all however included in the scope of protection of the invention as defined in the following claims.

## Claims

1. Marking machine (1) for generating an imprint onto a surface to be marked of a food product, preferably cheese, comprising:
a die (2) having a working face (3) for generating an imprint onto the surface to be marked,
a tool-holder body (4) with which said die (2) is combined, preferably in a removable way, and
movement means (6) for moving said working surface (3) with a rotary-orbital, percussion and/or reciprocation motion,
wherein said imprint is generated by the mechanical action of said working face (3) with the removal and/or displacement of material from said surface without burning said surface,
**characterized in that** said marking machine (1) comprises at least one auxiliary system selected from the group comprising:
a pumping system for delivering at least one pigment at said working face and/or for delivering at least one substance aiding the mechanical marking at said working face, and
a suction system for sucking in waste material and/or vapors at said working face and/or favoring the adhesion of said marking machine to the surface to be marked or to a body comprising the surface to be marked;
or comprises
at least one coupling (10, 12) for an outer auxiliary system,
at least one path (11, 13), and
a gasket (14) or at least one suction pad (16)
wherein said at least one path is extended between said at least one coupling (10, 12) and said working face (3) or a point of said tool-holder body proximal to said working face (3), or is extended between said at least one coupling and said at least one suction pad (16),
wherein
said gasket (14), which is adapted for adhering to the surface to be marked, is combined with said tool-holder body (4) and surrounds said working face (3),
or wherein
said marking machine comprises at least one arm (15) combined laterally with said tool-holder body (4), wherein said at least one suction pad (16), which is adapted for adhering to the surface to be marked, is combined with an end portion of said at least one arm (15) on the side of said die (2).

2. Marking machine according to claim 1, wherein said gasket (14) is bellows-like or made of elastic material, for example rubber.

3. Marking machine according to claim 1 or 2, comprising a thermal stabilization system for heating and/or cooling said working face.

4. Marking machine according to claim 1, 2 or 3, wherein said pumping system comprises at least one pump (107) and at least one path (111), wherein said at least one pump (107) is adapted to supply and measure out said at least one pigment and/or adapted to supply and measure out said at least one substance aiding the mechanical marking and wherein said at least one path (111) is adapted for delivering said at least one pigment and/or said at least one substance aiding the mechanical marking, said at least one path being extended between said at least one pump (107) and said working face (3).

5. Marking machine according to claim 4, wherein said at least one path comprises micro-holes distributed over said working face (3) for the passage of said at least one pigment and/or said at least one substance aiding the mechanical marking.

6. Marking machine according to any one of the preceding claims, wherein said suction system comprising at least one pump (106) and at least one path (112), wherein said at least one pump (106) is adapted for sucking air and said at least one path (112) is adapted for the passage of the air sucked, said at least one path being extended between said at least one pump and said working face (3) or a point of said tool-holder body (4) proximal to the working face.

7. Marking machine according to any one of the preceding claims, wherein said suction system comprises a gasket (14) combined with said tool-holder body (4) and surrounding said working face (3), which gasket is adapted for adhering to the surface to be marked, wherein said gasket (14) is preferably bellows-like or made of elastic material, for example rubber.

8. Marking machine according to any one of the preceding claims, wherein said suction system comprises at least one pump adapted for sucking air, at least one arm (15) combined laterally with said tool-holder body (4), at least one suction pad (16) combined with an end portion of said at least one arm (15) on the side of said die (2) and adapted for adhering to the surface to be marked, and at least one path (17) adapted for the passage of the air sucked and extended between said at least one pump and said at least one suction pad (16).

9. Marking machine according to any one of claims 3-8, wherein said at least one thermal stabilization system comprises heating and/or cooling means comprising at least one pump, at least one path (18) extended between said at least one pump and said working face, and at least one fluid circulating in said at least one path on which said at least one pump operates.

10. Marking machine according to any one of claims 3-9, wherein said at least one thermal stabilization system comprises heating and/or cooling means comprising at least one electric resistance and/or at least one Peltier cell and/or at least one heat pipe.

11. Marking machine according to any one of the preceding claims, wherein said at least one auxiliary system is at least partially outside said tool-holder body (4).

12. Marking machine according to any one of the preceding claims, wherein said movement means are at least partially outside said tool-holder body (4).

13. Marking machine according to claim 11 or 12, comprising at least one auxiliary container (20) outside said tool-holder body (4), wherein at least part of said at least one auxiliary system and/or at least part of said movement means is/are housed inside said at least one auxiliary container (20), wherein said at least one auxiliary container is preferably a shoulder backpack comprising shoulder straps (20a).

14. Marking machine according to any one of the preceding claims, wherein said movement means are electric, electromagnetic, pneumatic movement means or a combination thereof, which movement means comprise an electric motor (7) and/or an electromagnet (602, 702) and/or a pressurized fluid.

15. Marking machine according to any one of the preceding claims, comprising a cycle programmer and/or a local memory (21) and/or a wired or *wireless* data transmission system (22) comprising at least one data transmission board and/or a location system, preferably a GPS.

16. Marking machine according to any one of the preceding claims, wherein said movement means comprise motion transforming means selected from the group comprising bevel gears, cogwheels, eccentric shafts, diaphragm systems, piston systems.

17. Process of marking for generating an imprint onto a surface to be marked of a food product, preferably cheese, comprising the steps of:
a) providing a marking machine according to any one of the preceding claims;
b) contacting said marking machine with a surface to be marked by activating said marking machine before or after initiating said contact, resulting in a desired imprint on said surface, wherein said desired imprint is achieved by mechanical removal and/or displacement of material from said surface, without burning said surface.

18. Process according to claim 17, comprising:
a pumping step wherein at least one pigment and/or substance aiding the mechanical marking is delivered at the working face of the die, and/or
a sucking step wherein waste material and/or vapors deriving from the removal and/or displacement of material from said surface is/are sucked and/or wherein the adhesion of said marking machine to the surface to be marked or to a body comprising the surface to be marked is favored.

19. Process according to claim 18, comprising a thermal stabilization step wherein said working face is cooled or heated.

## Patentansprüche

1. Markiermaschine (1) zum Erzeugen eines Abdrucks auf einer zu markierenden Oberfläche eines Lebensmittels, vorzugsweise von Käse, umfassend:
einen Formwerkzeug (2) mit einer Arbeitsfläche (3) zum Erzeugen eines Abdrucks auf der zu markierenden Oberfläche,
einen Werkzeughalterkörper (4), mit dem das Formwerkzeug (2) vorzugsweise lösbar verbunden ist, und
Bewegungsmittel (6) zum Bewegen der Arbeitsfläche (3) mit einer rotierend-orbitalen, schlagenden und/oder hin- und hergehenden Bewegung,
wobei der Abdruck durch mechanische Einwirkung der Arbeitsfläche (3) unter Abtragung und/oder Verdrängung von Material von der Oberfläche erzeugt wird, ohne dass die Oberfläche verbrannt wird,
**dadurch gekennzeichnet, dass** die Markiermaschine (1) mindestens ein Hilfssystem umfasst, das aus der Gruppe ausgewählt ist, die umfasst:
ein Pumpsystem zum Zuführen zumindest eines Pigments an die Arbeitsfläche und/oder zum Zuführen zumindest einer die mechanische Markierung unterstützenden Substanz an die Arbeitsfläche sowie
ein Absaugsystem zum Absaugen von Abfallmaterial und/oder Dämpfen an der Arbeitsfläche und/oder zum Fördern der Haftung der Markiermaschine an der zu markierenden Oberfläche oder an einem Körper, der die zu markierende Oberfläche umfasst;
oder umfasst
zumindest einen Anschluss (10, 12) für ein externes Hilfssystem,
zumindest einen Pfad (11, 13) und
eine Dichtung (14) oder mindestens einen Saugnapf (16)
wobei sich der zumindest eine Pfad zwischen der zumindest einen Anschluss (10, 12) und der Arbeitsfläche (3) oder einem Punkt des Werkzeughalterkörpers proximal zur Arbeitsfläche (3) erstreckt oder sich zwischen der zumindest einen Anschluss und dem zumindest einen Saugnapf (16) erstreckt,
wobei
die Dichtung (14), die zum Anhaften an der zu markierenden Oberfläche geeignet ist, mit dem Werkzeughalterkörper (4) verbunden ist und die Arbeitsfläche (3) umgibt,
oder wobei
die Markiermaschine mindestens einen Arm (15) umfasst, der seitlich mit dem Werkzeughalterkörper (4) verbunden ist, wobei der mindestens eine Saugnapf (16), der zum Ansaugen an der zu markierenden Oberfläche geeignet ist, mit einem Endabschnitt des mindestens einen Arms (15) auf der Seite des Formwerkzeugs (2) verbunden ist.

2. Markiermaschine nach Anspruch 1, wobei die Dichtung (14) balgartig ausgebildet oder aus einem elastischen Material, beispielsweise Gummi, besteht.

3. Markiermaschine nach Anspruch 1 oder 2, die ein thermisches Stabilisierungssystem zum Erwärmen und/oder Kühlen der Arbeitsfläche umfasst.

4. Markiermaschine nach Anspruch 1, 2 oder 3, wobei das Pumpsystem mindestens eine Pumpe (107) und mindestens einen Pfad (111) umfasst, wobei die mindestens eine Pumpe (107) dazu geeignet ist, das mindestens eine Pigment zuzuführen und auszudosieren und/oder dazu geeignet ist, die mindestens eine die mechanische Markierung unterstützende Substanz zuzuführen und auszudosieren, und wobei der mindestens eine Pfad (111) dazu geeignet ist, das mindestens eine Pigment und/oder die mindestens eine die mechanische Markierung unterstützende Substanz bereitzustellen, wobei sich der mindestens eine Pfad zwischen der mindestens einen Pumpe (107) und der Arbeitsfläche (3) erstreckt.

5. Markiermaschine nach Anspruch 4, wobei der mindestens eine Pfad Mikrobohrungen umfasst, die über die Arbeitsfläche (3) verteilt sind und für den Durchfluss des mindestens einen Pigments und/oder der mindestens einen die mechanische Markierung unterstützenden Substanz vorgesehen sind.

6. Markiermaschine nach einem der vorstehenden Ansprüche, wobei das Saugsystem mindestens eine Pumpe (106) und mindestens einen Pfad (112) umfasst, wobei die mindestens eine Pumpe (106) zum Ansaugen von Luft geeignet ist und der mindestens eine Pfad (112) zum Durchfluss der angesaugten Luft geeignet ist, wobei sich der mindestens eine Pfad zwischen der mindestens einen Pumpe und der Arbeitsfläche (3) oder einem Punkt des Werkzeughalterkörpers (4) proximal zur Arbeitsfläche erstreckt.

7. Markiermaschine nach einem der vorstehenden Ansprüche, wobei das Saugsystem eine mit dem Werkzeughalterkörper (4) verbundene und die Arbeitsfläche (3) umgebende Dichtung (14) umfasst, welche Dichtung derart ausgelegt ist, dass sie an der zu markierenden Oberfläche haftet, wobei die Dichtung (14) vorzugsweise balgartig ausgebildet oder aus einem elastischen Material, beispielsweise Gummi, hergestellt ist.

8. Markiermaschine nach einem der vorstehenden Ansprüche, wobei das Saugsystem mindestens eine zum Ansaugen von Luft geeignete Pumpe, mindestens einen seitlich mit dem Werkzeughalterkörper (4) verbundenen Arm (15), mindestens einen Saugnapf (16), der an einem Endabschnitt des mindestens einen Arms (15) auf der Seite des Formwerkzeugs (2) angebracht und zum Anhaften an der zu markierenden Oberfläche geeignet ist, sowie zumindest einen Pfad (17), der zum Durchfluss der angesaugten Luft geeignet ist und sich zwischen der mindestens einen Pumpe und dem mindestens einen Saugnapf (16) erstreckt.

9. Markiermaschine nach einem der Ansprüche 3 bis 8, wobei das mindestens eine thermische Stabilisierungssystem Heiz- und/oder Kühlmittel umfasst, die mindestens eine Pumpe, mindestens einen zwischen der mindestens einen Pumpe und der Arbeitsfläche erstreckten Pfad (18) und mindestens ein in dem mindestens einen Pfad zirkulierendes Fluid, auf das die mindestens eine Pumpe einwirkt, umfassen.

10. Markiermaschine nach einem der Ansprüche 3 bis 9, wobei das mindestens eine thermische Stabilisierungssystem Heiz- und/oder Kühlmittel umfasst, die mindestens einen elektrischen Widerstand und/oder mindestens eine Peltier-Zelle und/oder mindestens ein Wärmerohr umfassen.

11. Markiermaschine nach einem der vorstehenden Ansprüche, wobei sich das mindestens eine Hilfssystem zumindest teilweise außerhalb des Werkzeughalterkörpers (4) befindet.

12. Markiermaschine nach einem der vorstehenden Ansprüche, wobei sich die Bewegungsmittel zumindest teilweise außerhalb des Werkzeughalterkörpers (4) befinden.

13. Markiermaschine nach Anspruch 11 oder 12, umfassend mindestens einen Hilfsbehälter (20) außerhalb des Werkzeughalterkörpers (4), wobei mindestens ein Teil des mindestens einen Hilfssystems und/oder mindestens ein Teil der Bewegungsmittel in dem mindestens einen Hilfsbehälter (20) aufgenommen ist bzw. sind, wobei der mindestens eine Hilfsbehälter vorzugsweise ein Schulterrucksack mit Schultergurten (20a) ist.

14. Markiermaschine nach einem der vorstehenden Ansprüche, wobei die Bewegungsmittel elektrische, elektromagnetische oder pneumatische Bewegungsmittel oder eine Kombination davon sind, wobei die Bewegungsmittel einen Elektromotor (7) und/oder einen Elektromagneten (602, 702) und/oder ein unter Druck stehendes Fluid umfassen.

15. Markiermaschine nach einem der vorstehenden Ansprüche, umfassend einen Zyklusprogrammierer und/oder einen lokalen Speicher (21) und/oder ein drahtgebundenes oder drahtloses Datenübertragungssystem (22) umfassend mindestens eine Datenübertragungskarte und/oder ein Ortungssystem, vorzugsweise ein GPS.

16. Markiermaschine nach einem der vorstehenden Ansprüche, wobei die Bewegungsmittel Bewegungsumwandlungsmittel umfassen, die aus der Gruppe umfassend Kegelradgetriebe, Zahnräder, Exzenterwellen, Diaphragmasysteme und Kolbensysteme ausgewählt sind.

17. Markierungsverfahren zum Erzeugen eines Abdrucks auf einer zu markierenden Oberfläche eines Lebensmittels, vorzugsweise von Käse, umfassend folgende Schritte:
a) Bereitstellen einer Markiermaschine gemäß einem der vorstehenden Ansprüche;
b) Inkontaktbringen der Markiermaschine mit einer zu markierenden Oberfläche durch Aktivieren der Markiermaschine vor oder nach dem Einleiten des Kontakts, sodass ein gewünschter Abdruck auf der Oberfläche entsteht, wobei der gewünschte Abdruck durch mechanisches Abtragen und/oder Verdrängen von Material von der Oberfläche ohne Verbrennen der Oberfläche erzielt wird.

18. Verfahren nach Anspruch 17, umfassend:
einen Pumpschritt, bei dem mindestens ein Pigment und/oder eine die mechanische Markierung unterstützende Substanz an die Arbeitsfläche der Matrize abgegeben wird, und/oder
einen Absaugschritt, bei dem Abfallmaterial und/oder Dämpfe, die beim Abtragen und/oder Verdrängen von Material von der genannten Oberfläche entstehen, abgesaugt werden und/oder bei dem die Haftung der genannten Markiermaschine an der zu markierenden Oberfläche oder an einem Körper, der die zu markierende Oberfläche umfasst, gefördert wird.

19. Verfahren nach Anspruch 18, umfassend einen thermischen Stabilisierungsschritt, bei dem die Arbeitsfläche gekühlt oder erwärmt wird.

## Revendications

1. Machine de marquage (1) pour générer une empreinte sur une surface à marquer d'un produit alimentaire, de préférence du fromage, comprenant:
une matrice (2) ayant une face de travail (3) pour générer une empreinte sur la surface à marquer,
un corps porte-outil (4) avec lequel est associé ladite matrice (2), de préférence de manière amovible, et
des moyens de déplacement (6) pour déplacer ladite face de travail (3) selon un mouvement roto-orbital, à percussion et/ou alternatif,
dans laquelle ladite empreinte est générée par l'action mécanique de ladite face de travail (3) en enlevant et/ou en déplaçant de matière de ladite surface sans brûler ladite surface,
**caractérisée en ce que** ladite machine de marquage (1) comprend au moins un système auxiliaire sélectionné parmi le groupe comprenant:
un système de pompage pour acheminer au moins un pigment sur ladite face de travail et/ou pour acheminer au moins une substance facilitant le marquage mécanique en correspondance de ladite face de travail, et
un système d'aspiration pour aspirer les déchets et/ou les vapeurs en correspondance de ladite face de travail et/ou pour favoriser l'adhérence de ladite machine de marquage à la surface à marquer ou à un corps comprenant la surface à marquer;
ou comprend
au moins un couplage (10, 12) pour un système auxiliaire externe,
au moins un parcours (11, 13), et
un joint (14) ou au moins une ventouse (16)
dans laquelle ledit au moins un parcours s'étend entre ledit au moins un couplage (10, 12) et ladite face de travail (3) ou un point dudit corps porte-outil proximal à ladite face de travail (3), ou s'étend entre ledit au moins un couplage et ladite au moins une ventouse (16),
dans laquelle
ledit joint (14), qui est adapté pour adhérer à la surface à marquer, est associé audit corps porte-outil (4) et entoure ladite face de travail (3),
ou dans laquelle
ladite machine de marquage comprend au moins un bras (15) associé latéralement audit corps porte-outil (4), dans laquelle ladite au moins une ventouse (16), qui est adaptée pour adhérer à la surface à marquer, est associée à une portion d'extrémité dudit au moins un bras (15) du côté de ladite matrice (2).

2. Machine de marquage selon la revendication 1, dans laquelle ledit joint (14) est comme un soufflet ou est réalisé d'un matériau élastique, par exemple du caoutchouc.

3. Machine de marquage selon la revendication 1 ou 2, comprenant un système de stabilisation thermique pour chauffer et/ou refroidir ladite face de travail.

4. Machine de marquage selon la revendication 1, 2 ou 3, dans laquelle ledit système de pompage comprend au moins une pompe (107) et au moins un parcours (111), dans laquelle ladite au moins une pompe (107) est adaptée pour fournir et doser ledit au moins un pigment et/ou est adaptée pour fournir et doser ladite au moins une substance facilitant le marquage mécanique et dans laquelle ledit au moins un parcours (111) est adapté pour acheminer ledit au moins un pigment et/ou ladite au moins une substance facilitant le marquage mécanique, ledit au moins un parcours étant étendu entre ladite au moins une pompe (107) et ladite face de travail (3).

5. Machine de marquage selon la revendication 4, dans laquelle ledit au moins un parcours comprend des micro-trous distribués sur ladite face de travail (3) pour le passage dudit au moins un pigment et/ou de ladite au moins une substance facilitant le marquage mécanique.

6. Machine de marquage selon l'une quelconque des revendications précédentes, dans laquelle ledit système d'aspiration comprenant au moins une pompe (106) et au moins un parcours (112), dans laquelle ladite au moins une pompe (106) est adaptée pour aspirer de l'air et ledit au moins un parcours (112) est adapté pour le passage de l'air aspiré, ledit au moins un parcours étant étendu entre ladite au moins une pompe et ladite surface de travail (3) ou un point dudit corps porte-outil (4) proximal à la surface de travail.

7. Machine de marquage selon l'une quelconque des revendications précédentes, dans laquelle ledit système d'aspiration comprend un joint (14) associé audit corps porte-outil (4) et entourant ladite surface de travail (3), lequel joint est adapté pour adhérer à la surface à marquer, dans laquelle ledit joint (14) est de préférence comme un soufflet ou réalisé d'un matériau élastique, par exemple du caoutchouc.

8. Machine de marquage selon l'une quelconque des revendications précédentes, dans laquelle ledit système d'aspiration comprend au moins un pompe adaptée pour aspirer de l'air, au moins un bras (15) associé latéralement audit corps porte-outil (4), au moins une ventouse (16) associée à une portion d'extrémité dudit au moins un bras (15) du côté de ladite matrice (2) et adaptée pour adhérer à la surface à marquer, et au moins un parcours (17) adapté pour le passage de l'air aspiré et étendu entre ladite au moins une pompe et ladite au moins une ventouse (16).

9. Machine de marquage selon l'une quelconque des revendications 3-8, dans laquelle ledit au moins un système de stabilisation thermique comprend des moyens de chauffage et/ou de refroidissement comprenant au moins une pompe, au moins un parcours (18) étendu entre ladite au moins une pompe et ladite surface de travail, et au moins un fluide circulant dans ledit au moins un parcours sur lequel fonctionne ladite au moins une pompe.

10. Machine de marquage selon l'une quelconque des revendications 3-9, dans laquelle ledit au moins un système de stabilisation thermique comprend des moyens de chauffage et/ou de refroidissement comprenant au moins une résistance électrique et/ou au moins une cellule Peltier et/ou au moins un caloduc.

11. Machine de marquage selon l'une quelconque des revendications précédentes, dans laquelle ledit au moins un système auxiliaire est au moins partiellement à l'extérieur dudit corps porte-outil (4).

12. Machine de marquage selon l'une quelconque des revendications précédentes, dans laquelle lesdits moyens de déplacement sont au moins partiellement à l'extérieur dudit corps porte-outil (4).

13. Machine de marquage selon la revendication 11 ou 12, comprenant au moins un récipient auxiliaire (20) à l'extérieur dudit corps porte-outil (4), dans laquelle au moins une partie dudit au moins un système auxiliaire et/ou au moins une partie desdits moyens de déplacement est/sont logée(s) à l'intérieur dudit au moins un récipient auxiliaire (20), dans laquelle ledit au moins un récipient auxiliaire est de préférence un sac-à-dos à bretelles comprenant des sangles (20a) pour les épaules.

14. Machine de marquage selon l'une quelconque des revendications précédentes, dans laquelle lesdits moyens de déplacement sont des moyens de déplacement électriques, électromagnétiques, pneumatiques ou une combinaison des mêmes, lesquels moyens de déplacement comprennent un moteur électrique (7) et/ou un électroaimant (602, 702) et/ou un fluide pressurisé.

15. Machine de marquage selon l'une quelconque des revendications précédentes, comprenant un programmateur de cycle et/ou une mémoire locale (21) et/ou un système de transmission de données filaire ou *sans fil* (22) comprenant au moins une carte de transmission de données et/ou un système de localisation, de préférence un GPS.

16. Machine de marquage selon l'une quelconque des revendications précédentes, dans laquelle lesdits moyens de déplacement comprennent des moyens de transformation de mouvement sélectionnés parmi le groupe comprenant des couples coniques, des roues dentées, des arbres excentriques, des systèmes à diaphragme, des systèmes à pistons.

17. Procédé de marquage pour générer une empreinte sur une surface à marquer d'un produit alimentaire, de préférence du fromage, comprenant les étapes de:
a) mettre à disposition une machine de marquage selon l'une quelconque des revendications précédentes;
b) mettre ladite machine de marquage en contact avec une surface à marquer en activant ladite machine de marquage avant ou après avoir initié ledit contact, obtenant ainsi une empreinte désirée sur ladite surface, dans lequel ladite empreinte désirée est obtenue par l'enlèvement et/ou le déplacement mécanique de matière de ladite surface, sans brûler ladite surface.

18. Procédé selon la revendication 17, comprenant:
une étape de pompage dans laquelle au moins un pigment et/ou une substance facilitant le marquage mécanique est acheminé(e) en correspondance de la face de travail de la matrice, et/ou
une étape d'aspiration dans laquelle les déchets et/ou les vapeurs résultant de l'enlèvement et/ou du déplacement de matière de ladite surface sont aspirés et/ou dans laquelle l'adhérence de ladite machine de marquage à la surface à marquer ou à un corps comprenant la surface à marquer est favorisée.

19. Procédé selon la revendication 18, comprenant une étape de stabilisation thermique dans laquelle ladite face de travail est refroidie ou chauffée.
